# EUROPÄISCHE PATENTANMELDUNG

(11) **EP 0 738 687 A1**
(43) Veröffentlichungstag der Anmeldung: **23.10.1996**
(21) Anmeldenummer: 96890063.9
(22) Anmeldetag: 29.03.1996
(51) Int. Cl.: C02F 3/04, C02F 3/12

(54) **Kläranlage**

(30) Priorität: 20.04.1995 AT 221/95
(71) Anmelder: Schlatte, Anton, 9470 St. Paul (AT)
(72) Erfinder: Schlatte, Anton, 9470 St. Paul (AT)
(74) Vertreter: Kliment, Peter, Dipl.-Ing.

(57) **Zusammenfassung**

Abwasser-Kläranlage, insbesondere für dezentral gelegene Kleinstsiedlungen, mit einer Vorklär- bzw. Absetzeinrichtung (1), der eine biologische Reinigungsstufe (13) und dieser ein Sickerschacht (17) nachgeordnet sind. Um einen einfachen Aufbau zu ermöglichen ist vorgesehen, daß die biologische Reinigungsstufe (13) in ihrem oberen Bereich ein von der Vorklärbzw. Absetzeinrichtung (1) kommendes Zulaufrohr (6) aufweist unter dem mehrere untereinander angeordnete aus Faservlies hergestellte Filter (25, 26, 27, 28) angeordnet sind, denen über ein Sandbett (29, 30) ein Aktivkohlefilter (42) nachgeordnet ist, der einem zum Sickerschacht (17) führenden Ablauf (15) vorgeschaltet ist, wobei der oberste Filter (25) im unter der Mündung des Zulaufrohres (6) liegenden Bereich mit einer Prallplatte (35), die vorzugsweise aus Beton hergestellt ist, abgedeckt ist und die Räume (39) zwischen den einzelnen Filtern (25, 26, 27, 28) belüftet sind.

## Beschreibung

Die Erfindung bezieht sich auf eine Kläranlage gemäß dem Oberbegriff des Anspruches 1.

Bei der Entsorgung des Abwassers, insbesondere von dezentral gelegenenen Ein- oder Zweifamilienhäusern oder Kleinstsiedlungen mit meist weniger als zehn Einfamilienhäusern ergibt sich meist das Problem, daß ein Anschluß an eine zentrale Abwasser-Kläranlage nur mit sehr langen Kanalleitungen und einem dementsprechend hohen Aufwand möglich ist. Andererseits stellen die häufig verwendeten Sickergruben, in denen unbehandeltes Abwasser versickern kann, eine erhebliche Umweltbelastung dar und werden daher in der Regel nicht mehr genehmigt.

Bei für solche dezentrale Kleinstsiedlungen bzw. Einfamilienhäuser häufig vorgesehenen dichten Senkgruben ergibt sich wieder das Problem, daß diese in entsprechenden Abständen entleert und der Inhalt trasportiert und behandelt werde muß, was mit einem erheblichen Aufwand verbunden ist. Außerdem besteht auch die Gefahr, daß die Senkgrube undicht werden kann.

Ziel der Erfindung ist es, dies Nachteile zu vermeiden und eine Kläranlage der eingangs erwähnten Art vorzuschlagen, die sich durch einen einfachen Aufbau auszeichnet.

Erfindungsgemäß wird dies bei einer Kläranlage der eingangs erwähnten Art durch die kennzeichnenden Merkmale des Anspruches 1 erreicht.

Durch die vorgeschlagenenen Maßnahmen ergibt sich ein sehr einfacher Aufbau, bei dem jedoch ein aerober Abbau der Verunreinigungen sichergestellt ist. Die erforderliche Luftzufuhr ist dabei durch das Aufprallen des vorgeklärten und von Feststoffen im wesentlichen befreiten Abwassers auf die Prallplatte und die in den Filtern enthaltene Luft gewährleistet. Außerdem ist durch die Belüftung der Zwischenräume zwischen den Filtern eine Aufnahme von Sauerstoff aus der Umgebungsluft durch das von Filter zu Filter abtropfende Wasser sichergestellt.

Die Filter setzen sich vom Bereich des Auftreffens des zu behandelnden Abwassers gegen die Ränder der Filter zu und geben dabei die in ihnen gehaltene Luft an das Wasser ab.

Durch die Merkmale des Anspruches 2 ergibt sich ein sehr einfacher Aufbau, bei dem eine gute Belüftung der Zwischenräume zwischen den einzelnen Filtern sichergestellt ist. Dabei kann auf eine mechanische Belüftung verzichtet werden, wodurch sich einerseits der Aufwand bei der Errichtung einer solchen Kläranlage aber auch deren ständige Betriebskosten entsprechend niedrig halten lassen.

Durch die Merkmale des Anspruches 3 ergibt sich ein sehr kompakter Aufbau der Kläranlage.

Besonders günstige Verhältnisse für die Aufbereitung von Abwasser und den Betrieb der Anlage ergeben sich durch die Merkmale des Anspruches 4. So können die rechteckigen Filter sehr leicht ausgetauscht werden und die vorgeschlagenen Filtermaterialien bieten den für einen Abbau der Schadstoffe des Abwassers erforderlichen Mikroorganismen sehr gute Lebensbedingungen.

Durch die im Anspruch 5 vorgeschlagenen Maßnahmen erhalten die Filter eine hohe mechanische Festigkeit und können ein relativ großes Luftvolumen aufnehmen.

Um die Filter rasch und einfach wechseln zu können, ist es vorteilhaft die Merkmale des Anspruches 6 vorzusehen.

Durch die Merkmale des Anspruches 7 wird ein sehr hohes Maß an Reinheit des in den Sickerschacht gelangenden Wassers sichergestellt.

Durch die Merkmale des Anspruches 8 läßt sich ein besonders hoher Reinigungsgrad für das zu behandelnde Abwasser erreichen.

Die Erfindung wird nun anhand der Zeichnung näher erläutert. Dabei zeigen:
Fig. 1 schematisch eine Kläranlage,
Fig. 2 schematisch einen Schnitt entlang der Linie II-II in der Fig. 1. durch die Vorklär- und Absetzeinrichtung,
Fig. 3 schematisch einen Längsschnitt durch die biologische Reinigungsstufe und
Fig. 4 einen Querschnitt durch die biologische Reinigungsstufe.

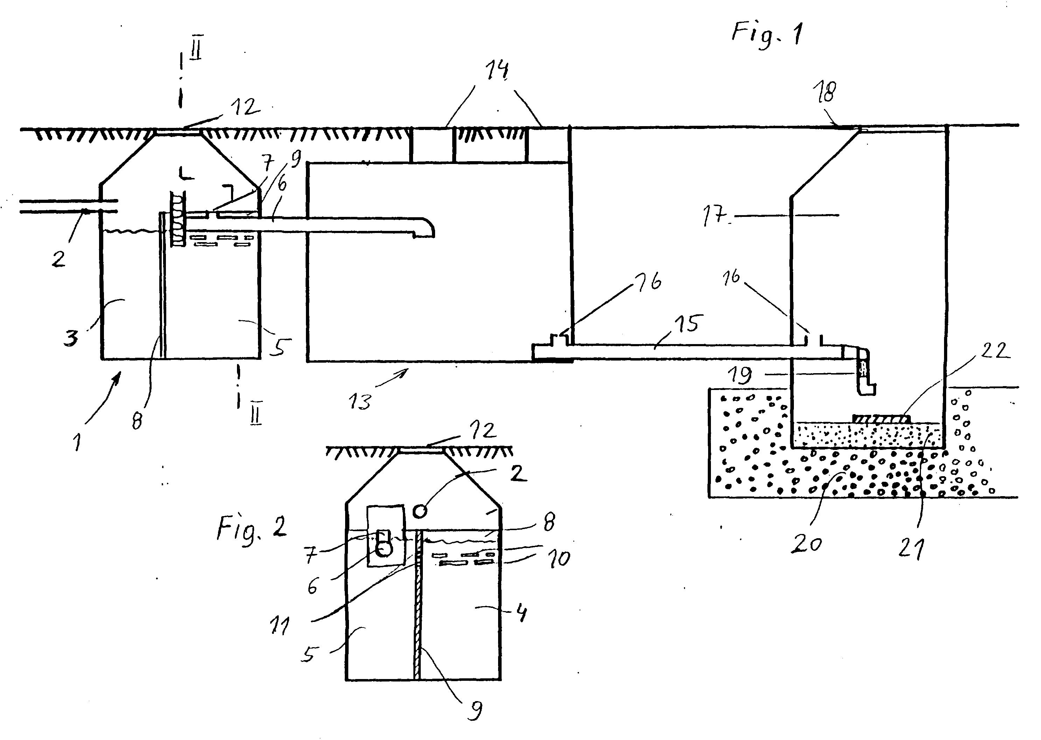

Die Kläranlage nach der Fig. 1 weist eine in das Erdreich versenkte Vorklär- und Absetzeinrichtung 1 auf, in die ein Zulauf 2 mündet. Die Vorklär- und Absetzeinrichtung 1 weist im wesentlichen drei Kammern 3, 4 und 5 auf, wobei aus der letzeren ein Ablaufrohr 6 wegführt, das mit einem Lüftungsstutzen 7 versehen ist.

Die Trennung der einzelnen Kammern 3, 4 und 5 voneinander erfolgt mittels der Wand 8, die sich im wesentlichen entlang einer Sehne der im wesentlichen zylindrischen Vorklär- und Absetzeinrichtung 1 erstreckt und der Wand 9, die im wesentlichen senkrecht zur Wand 8 verläuft. Im Bereich der Kammer 4 weist die Wand 8 in deren obersten Bereich Durchbrechungen 10 auf, über die von gröberen Feststoffen freies Abwasser 9 in die Kammer 4 überströmen kann. Gröbere Feststoffe werden in der Kammer 3 zurückgehalten und können dort ausfaulen und setzen sich letztlich als Schlamm ab.

In der Kammer 4 können sich feinere Feststoffe absetzen, sodaß ein im wesentlichen von Feststoffen befreites Abwasser über die im obersten Bereich der Wand 9 angeordneten Durchbrechungen 11 in die Kammer 5 überströmen kann.

Da die Vorklär- und Absetzeinrichtung 1 eine Entlüftung 12 aufweist, steht für den Faulprozeß ausreichend Luft- und damit Sauerstoff zur Verfügung. Dabei wird durch die Fallhöhe zwischen der Mündung des Zulaufs 2 und dem Wasserspiegel in den Kammern, der durch die Einlaßöffnung des Ablaufrohres 6 bestimmt ist, eine entsprechende Bewegung des Wasserspiegels bei jedem Zulauf von Abwasser sichergestellt, wodurch die Luftaufnahme des Abwassers verbessert wird.

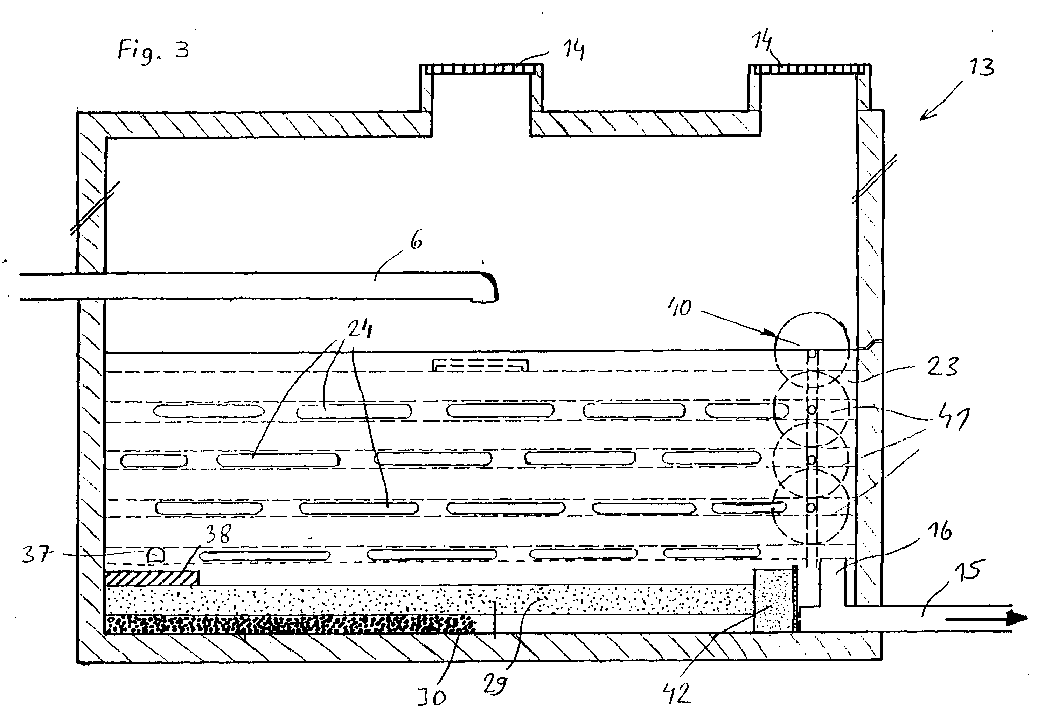

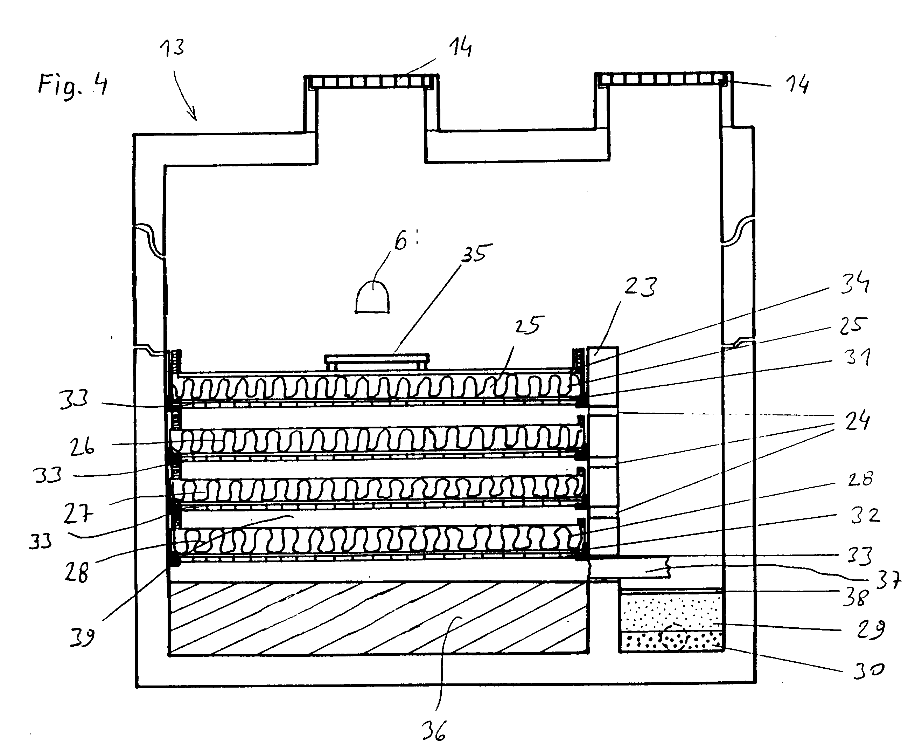

Das aus der Kammer 5 der Vorklär- und Absetzeinrichtung 1 ablaufende vorgeklärte und von Feststoffen befreite Abwasser gelangt in eine biologische Reingungsstufe 13, die anhand der Fig. 3 und 4 näher erläutert werden wird und die mit zwei Entlüftungen 14 versehen ist. Aus der biologischen Reinigungsstufe 13 gelangt das geklärte Wasser über eine Abzugsleitung 15, die mit Lüftungsstutzen 16 versehen ist, in einen Sickerschacht 17, der ebenfalls mit einer Entlüftung 18 versehen ist.

Dabei ist im Mündungsbereich der Abzugsleitung 15 ein Aktivkohlefilter 19 angeordnet.

Der Sickerschacht 17 steht auf einer ca. 40cm dicken Schicht 20 aus gewaschenem Sand mit einer Körnung im Bereich von 30 bis 100mm und weist ein Sandbett 21 mit einer Dicke von ca. 20cm und einer Körnung von 0 bis 4mm auf. Dabei ist das Sandbett 21 im unterhalb der Mündung der Abzugsleitung 15 liegenden Bereich durch eine aus Beton hergestellte Prallplatte 22 geschützt.

Wie aus der Fig. 3 zu ersehen ist, weist die biologische Reinigungsstufe 13 eine sich in deren Längsrichtung erstreckende Wand 23 auf, die mit Durchbrechungen 24 versehen ist. Diese Wand 23 trennt einen Bereich, in dem Filter 25, 26, 27, 28 angeordnet sind, von einem Bereich in dem ein Sandbett 29, 30 angeordnet ist.

Wie aus der Fig. 4 zu ersehen ist, sind die Filter 25, 26, 27, 28 an ihrer Unterseite mit einem Kunststoffvlies 31, 32 verbunden, wobei die untere Vliesschicht 31 des obersten Filters 25 erheblich dicker als die Vliesschichten 32 der übrigen drei Filter 26, 27, 28 ist und ca. 9mm beträgt, wogegen die Vliesschichten 32 eine Dicke von ca. 1mm aufweisen.

Die Filter 25, 26, 27, 28 liegen auf Gitterroste 33 auf, die an Winkeln 33 gehalten sind die an der Innenseite der biologischen Reinigungsstufe 13 und der Wand 23 befestigt sind.

Der oberste Filter 25 ist an seiner Oberseite mit einer weiteren Vliesschicht 34 aus Kunststoffasern verbunden. Außerdem ist im Bereich unmittelbar unter der Mündung des Ablaufrohres 6 eine aus Beton hergestellte Prallplatte 35 vorgesehen.

Unterhalb der vier Filter 25, 26, 27, 28 ist eine Betonschicht 36 vorgesehen, deren Oberfläche geneigt verläuft, wobei im Bereich des tiefsten Punktes dieser Betonschicht 36 ein die Wand 23 durchsetzendes Überlaufrohr 37 angeordnet ist. Dadurch kann das geklärte Wasser zum Sandbett 29, 30 gelangen das im Bereich der Mündung des Überlaufrohres 37 mit einer Prallplatte 38 geschützt ist.

Die Klärung des Abwassers in der biologischen Reinigungsstufe 13 erfolgt unter aeroben Bedingungen, wobei die erforderliche Luft einerseits durch die in den aus Gesteins- oder Glaswolle hergestellten Filtern 25, 26, 27, 28 gespeicherte Luft und andererseits durch Belüftung der Zwischenräume 39 zwischen den Filtern über die Durchbrechungen 24 der Wand 23 bereitgestellt wird.

Außerdem ergibt sich durch den Aufprall des Wassers auf die Prallplatte 35 eine sehr erhebliche Aufnahme von Luft durch das Wasser, sodaß für einen aeroben Aubbauprozeß ausreichend Luft zur Verfügung steht.

Die Filter 25, 26, 27, 28 setzen sich beginnend von dem die Prallplatte 35 umgebenden Bereich gegen die Ränder der Filter zu, wodurch die Höhe der Filter 25, 26, 27, 28 abnimmt und sich die in den Filtern vorhandene Luft mit dem zu klärenden Wasser vermengt.

Wie aus der Fig. 3 zu ersehen ist, ist eine Aufwickeleinrichtung 40 vorgesehen, die aus Gründen einer besseren Übersichtlichkeit ausschließlich in der Fig. 3 dargestllt ist. Diese besteht im wesentlichen aus vier herausnehmbar gehaltenen Haspeln 41, auf denen die verbrauchten Filter 25, 26, 27, 28 aufgewickelt werden können. Das beim Aufwickeln der Filter ausgepreßte Wasser fließt in den jeweils darunter befindliche Filter, bzw. auf die Betonschicht 36 und in das Sandbett 29, 30.

Beim Austauschen der Filter 25, 26, 27, 28 können die verbrauchten Filter einfach aufgewickelt und samt den Haspeln ausgebaut werden. Nach dem Einsetzen neuer mit frischen Filtern bewickelten Haspeln 41 können die Filter von diesen abgezogen und auf den Rosten 33 ausgebreitet werden.

Das aus dem Sandbett 29, 30 austretende Wasser tritt in ein Aktivkohlefilter 42 ein, das der Einmündung der Abzugsleitung 15 vorgeschaltet ist.

Damit ist sichergestellt, daß das Abwasser in einem sehr hohen Ausmaß geklärt in den Sickerschacht 17 gelangen kann, über den es an die Umwelt abgegeben wird.

## Patentansprüche

1. Abwasser-Kläranlage, insbesondere für dezentral gelegene Kleinstsiedlungen, mit einer Vorklär- bzw. Absetzeinrichtung (1), der eine biologische Reinigungsstufe (13) und dieser ein Sickerschacht (17) nachgeordnet sind, **dadurch gekennzeichnet,** daß die biologische Reinigungsstufe (13) in ihrem oberen Bereich ein von der Vorklär- bzw. Absetzeinrichtung (1) kommendes Zulaufrohr (6) aufweist, unter dem mehrere untereinander angeordnete aus Faservlies hergestellte Filter (25, 26, 27, 28) angeordnet sind, wobei der oberste Filter (25) im unter der Mündung des Zulaufrohres (6) liegenden Bereich mit einer Prallplatte (35) abgedeckt ist und die Räume (39) zwischen den einzelnen Filtern (25, 26, 27, 28) belüftet sind.

2. Kläranlage nach Anspruch 1, **dadurch gekennzeichnet,** daß die Filter (25, 26, 27, 28) in einem mit einer vom Boden aufragenden und sich über einen Teil seiner Höhe erstreckenden Trennwand (23) und Entlüftungen (14) versehenen Schacht angeordnet sind, wobei die Trennwand (23) mit in der Höhe der Zwischenräume (39 ) zwischen den einzelnen, auf Rosten (33) aufliegenden Filtern (25, 26, 27, 28) verbleibenden Zwischenräumen (39) mit Durchbrechungen (24) versehen sind.

3. Käranlage nach Anspruch 1 oder 2, **dadurch gekennzeichnet,** daß unter den Filtern (25, 26, 27, 28) eine ein Gefälle aufweisende Betonschicht (36) vorgesehen ist, von deren tiefster Stelle eine die Trennwand (23) des Schachtes durchsetzende Überlaufleitung (37) zum im selben Schacht angeordneten Sandbett (29, 30) führt, das im unter der Mündung der Überlaufleitung (37) liegenden Bereich mit einer Prallplatte (38), die vorzugsweise aus Beton hergestellt ist, abgedeckt ist.

4. Kläranlage nach einem der Ansprüche 1 bis 3, **dadurch gekennzeichnet,** daß die Filter (25, 26, 27, 28) aus Stein-, Glaswolle oder Schwamm hergestellt sind und eine rechteckige Form aufweisen.

5. Kläranlage nach einem der Ansprüche 1 bis 4, **dadurch gekennzeichnet,** daß die Filter (25, 26, 27, 28) an ihrer Unterseite mit einem Vlies (31, 32) aus Kunstfasern verbunden sind, wobei der oberste Filter (25) auch an seiner Oberseite mit einem Vlies (34) aus Kunstfasern verbunden ist und die Vliesschichten (31, 34) des obersten Filters (25) vorzugsweise dicker, als die der übrigen Filter (26, 27, 28) sind.

6. Kläranlage nach einem der Ansprüche 1 bis 5, **dadurch gekennzeichnet,** daß für jedes Filter (25, 26, 27, 28) eine Aufwickeleinrichtung (40) vorgesehen ist.

7. Kläranlage nach einem der Ansprüche 1 bis 6, **dadurch gekennzeichnet**, daß das Sandbett aus einer ca. 10cm dicken Schicht (30) aus Kies mit einer Korngröße von 4 bis 8mm und einer über dieser liegenden, ca. 20cm starken Schicht (29) aus gewaschenem Sand mit einer Korngröße von 0 bis 4mm gebildet ist.

8. Kläranlage nach einem der Ansprüche 1 bis 7, **dadurch gekennzeichnet,** daß dem Sandbett (29, 30) ein Aktivkohlefilter (42) nachgeordnet ist, der einem zum Sickerschacht (17) führenden Ablauf (15) vorgeschaltet ist,
